# EUROPEAN PATENT APPLICATION

(11) **EP 4 523 939 A1**
(43) Date of publication of application: **19.03.2025**
(21) Application number: 24198559.7
(22) Date of filing: 05.09.2024
(51) Int. Cl.: B60K 17/28, B60K 1/02, B62D 11/04, B62D 6/00, B62D 11/16, B62D 11/00, B60K 17/04

(54) **ELECTRIC CRAWLER VEHICLE**

(30) Priority: 06.09.2023 JP 2023144378
(71) Applicant: Yanmar Holdings Co., Ltd., Osaka-shi, Osaka (JP)
(72) Inventor: HASHIMOTO, Yusuke, Osaka (JP); TAKAHASHI, Tsutomu, Osaka (JP); DAIYAKUJI, Taihei, Osaka (JP); MASASHI, Matsumoto, Toyota-shi (JP)
(74) Representative: Novagraaf International SA

(57) **Abstract**

[Problem] To realize an inexpensive and compact electric crawler vehicle.

[Solution] An electric crawler vehicle comprising a pair of left and right traveling crawlers, each having a drive wheel, a traveling electric motor that generates traveling power to be transmitted to the pair of left and right traveling crawlers, a turning electric motor that generates turning power to be transmitted to the pair of left and right traveling crawlers, and a differential mechanism disposed in a power transmission path between the turning electric motor and each drive wheel of the pair of left and right traveling crawlers.

## Description

### TECHNICAL FIELD

The present invention relates to an electric crawler vehicle.

### BACKGROUND ART

Conventionally, such an art has been proposed that left and right traveling crawlers are independently moved by left and right electric motors, respectively (see, for example, Patent Document 1).

### PRIOR ART DOCUMENT

### PATENT DOCUMENT

Patent Document 1: Japanese Unexamined Patent Publication No. 2020-011591

### SUMMARY OF INVENTION

### TECHNICAL PROBLEM

In the configuration of Patent Document 1, both the left and right electric motors need to be configured by electric motors that generate large power for traveling of the vehicle, which leads to an increase in cost and in size of the vehicle.

The present invention was made in order to solve the aforementioned problems, and an object of the present invention is to realize an inexpensive and compact electric crawler vehicle.

### SOLUTION TO PROBLEM

An electric crawler vehicle according to one aspect of the present invention includes a pair of left and right traveling crawlers, each having a drive wheel, a traveling electric motor that generates traveling power to be transmitted to the pair of left and right traveling crawlers, a turning electric motor that generates turning power to be transmitted to the pair of left and right traveling crawlers, and a differential mechanism disposed in a power transmission path between the turning electric motor and each of the drive wheels of the pair of left and right traveling crawlers.

### ADVANTAGEOUS EFFECTS OF INVENTION

According to the aforementioned configuration, an inexpensive and compact electric crawler vehicle can be realized.

### BRIEF DESCRIPTION OF DRAWINGS

FIG. 1 is a side view showing a schematic configuration of an electric crawler, which is an example of an electric crawler vehicle according to an Embodiment of the present invention;
FIG. 2 is a perspective view of a transmission case included in the aforementioned electric crawler;
FIG. 3 is a perspective view of an inside of the aforementioned transmission case;
FIG. 4 is an explanatory view schematically illustrating a configuration of a differential mechanism included in the aforementioned electric crawler;
FIG. 5 is a block diagram schematically illustrating a configuration of a control system of the aforementioned electric crawler;
FIG. 6 is an explanatory view illustrating a power transmission path in a case where the aforementioned electric crawler is moving forward;
FIG. 7 is an explanatory view illustrating a power transmission path in a case where a right-side traveling crawler of the aforementioned electric crawler is idling;
FIG. 8 is a flowchart illustrating a flow of an operation according to an example of overspeed avoidance control of the turning electric motor included in the electric crawler;
FIG. 9 is a flowchart illustrating a flow of an operation according to another example of the aforementioned overspeed avoidance control;
FIG. 10 is a flowchart illustrating a flow of an operation according to still another example of the aforementioned overspeed avoidance control;
FIG. 11 is a flowchart illustrating a flow of an operation according to still another example of the aforementioned overspeed avoidance control;
FIG. 12 is an explanatory diagram illustrating an example of a display screen of a display unit included in the aforementioned electric crawler;
FIG. 13 is a flowchart illustrating a flow of an operation according to still another example of the aforementioned overspeed avoidance control;
FIG. 14 is an explanatory diagram illustrating another example of the display screen of the aforementioned display unit; and
FIG. 15 is a flowchart illustrating a flow of an operation according to still another example of the aforementioned overspeed avoidance control.

### DESCRIPTION OF EMBODIMENTS

An embodiment of the present invention will be described below with reference to the drawings.

### 1. Configuration of Electric Crawler Vehicle

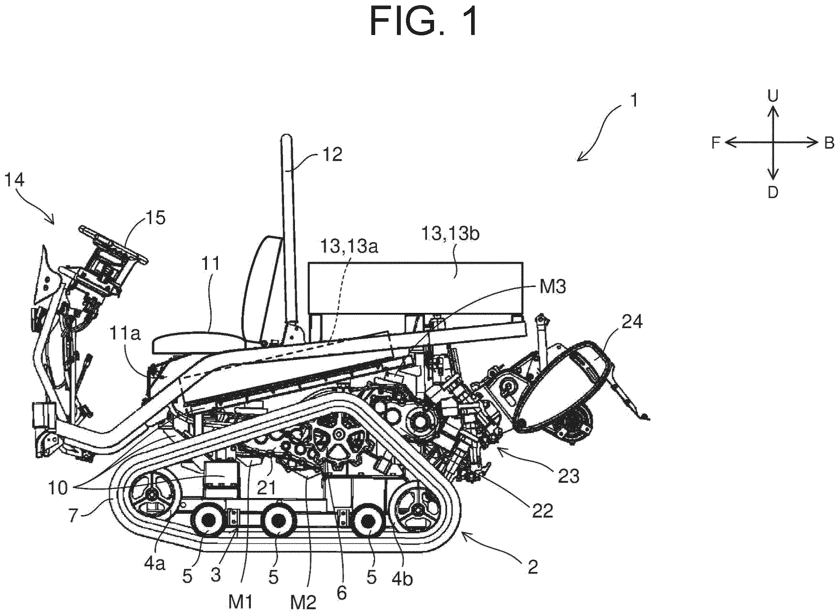

FIG. 1 is a side view illustrating a schematic configuration of an electric crawler 1, which is an example of an electric crawler vehicle of this Embodiment. Note that, hereinafter, the electric crawler 1 may be simply referred to as a vehicle.

Here, for convenience of explanation below, directions are defined as follows. A direction in which an operator (manipulator, driver) seated in a driver's seat 11 of the electric crawler 1 faces forward is defined as a front, and a direction opposite thereto is defined as a rear. Moreover, the left side as viewed from the operator seated in the driver's seat 11 is referred to as "left" and the right side as "right". Further, a gravity direction perpendicular to a front-rear direction and a left-right direction is defined as an up-down direction, an upstream side in the gravity direction is defined as "up", and a downstream side is defined as "down". In the drawings, when necessary, forward is denoted by a symbol "F", backward by "B", rightward by "R", leftward by "L", upward by "U", and downward by "D".

As shown in FIG. 1, the electric crawler 1 includes traveling crawlers 2 on left and right. Each of the traveling crawlers 2 includes a track frame 3 extending in the front-rear direction. On a front end part of the track frame 3, a front-side driven sprocket (also referred to as a front idler) 4a is rotatably supported, and on a rear end part, a rear-side driven sprocket 4b (also referred to as a rear idler) is rotatably supported. In the track frame 3, a plurality of rolling wheels 5 are rotatably supported between the front-side driven sprocket 4a and the rear-side driven sprocket 4b. On diagonally upper front of the rear-side driven sprocket 4b, a drive sprocket 6 is disposed as a drive wheel. A crawler belt 7 is wound around the drive sprocket 6, the front-side driven sprocket 4a, the rear-side driven sprocket 4b, and the plurality of rolling wheels 5 to constitute the traveling crawler 2. As described above, the electric crawler 1 includes a pair of left and right traveling crawlers 2, each having the drive wheel (drive sprocket 6).

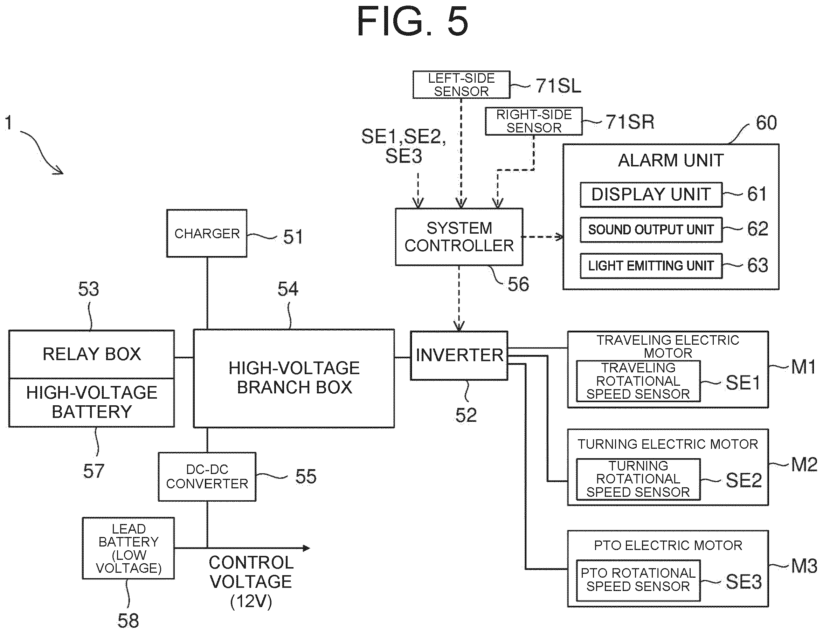

The electric crawler 1 includes a main body frame 10. The aforementioned track frame 3 is located below the main body frame 10 and is connected to the main body frame 10. A driver's seat 11 is disposed above the main body frame 10 via a seat mount 11a. A safety frame 12 is erected behind the driver's seat 11. A battery unit 13a is disposed in a space between the main body frame 10 and the driver's seat 11. Further, a battery unit 13b is disposed above the main body frame 10 and behind the safety frame 12. Electronic components (not shown) such as a system controller 56 (see FIG. 5) to be described later are disposed above the battery unit 13b. Note that the battery unit 13a and the battery unit 13b are collectively referred to also as a battery unit 13 below.

A floor (not shown) is provided on the front below the driver's seat 11. The floor is supported by the main body frame 10. A steering unit 14 is provided on the front side of the floor. In the steering unit 14, a steering wheel 15 for turning the vehicle, a lever for switching between forward and backward movement of the vehicle, a Power Take Off (PTO) switching lever, a brake pedal, and the like are provided.

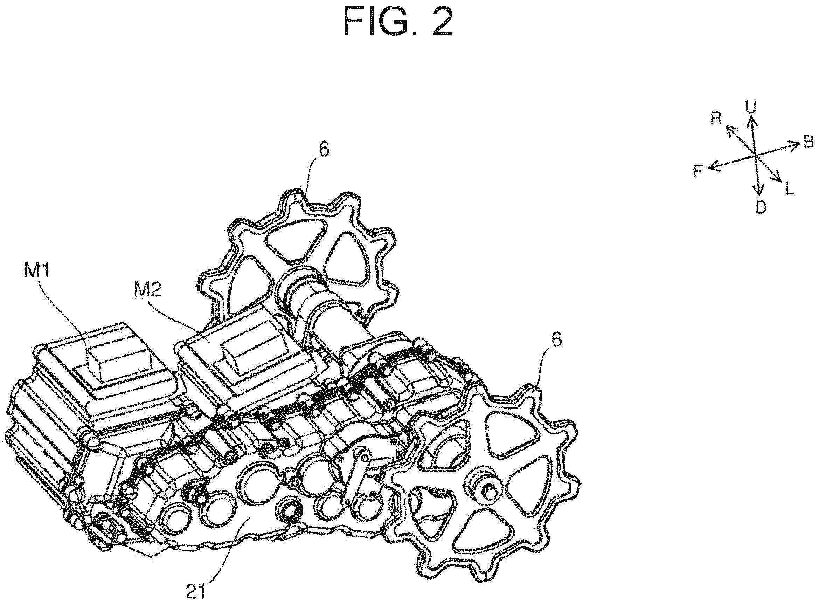

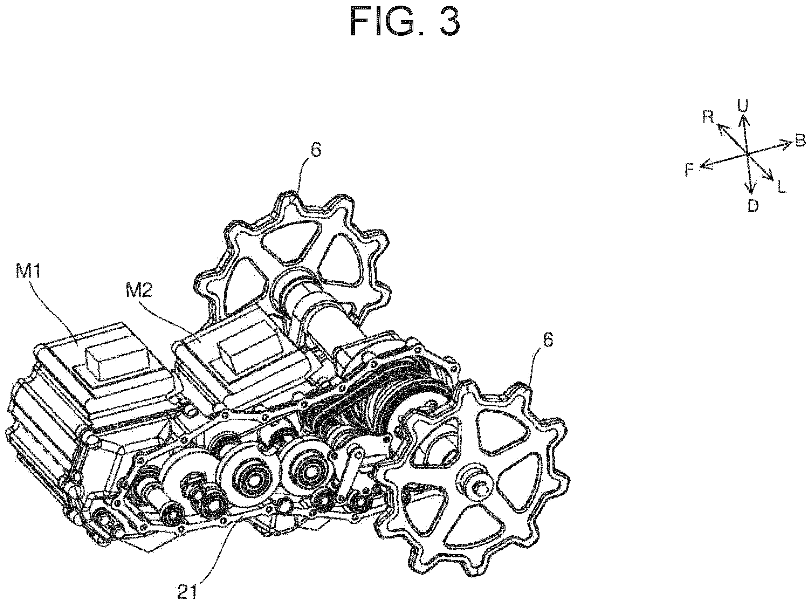

A transmission case 21 (gear case, first speed reducer) is disposed between the pair of left and right traveling crawlers 2. FIG. 2 is a perspective view of transmission case 21. FIG. 3 is a perspective view of an inside of the transmission case 21. A traveling electric motor M1 and a turning electric motor M2 are connected to the transmission case 21. The traveling electric motor M1 is located on the front of the turning electric motor M2. A plurality of gears and chains or belts are provided between the drive shaft of the traveling electric motor M1 and the drive shafts of the left and right traveling crawlers 2.

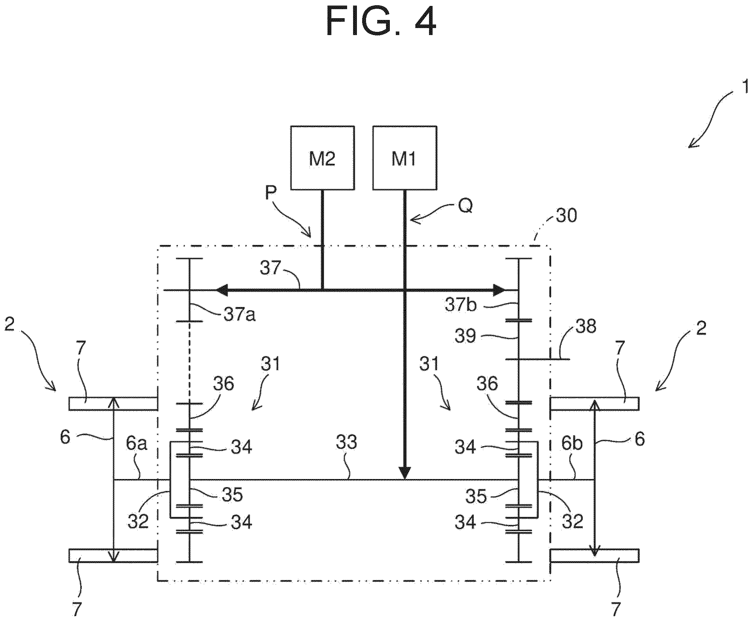

The traveling power generated by the traveling electric motor M1 is transmitted to the drive shafts of the left and right traveling crawlers 2 by the plurality of gears and the chains or the belts. Further, the plurality of gears are provided between the drive shaft of the turning electric motor M2 and the drive shafts of the left and right traveling crawlers 2, and turning power generated by the turning electric motor M2 is transmitted to the drive shafts of the left and right traveling crawlers 2 by the plurality of gears. The aforementioned drive sprockets 6 are provided at both left and right ends of the drive shafts of the left and right traveling crawlers 2. The drive sprocket 6 is rotated by the traveling power or the turning power transmitted to the drive shaft, whereby the left and right traveling crawlers 2 travel or turn. The electric crawler 1 includes a differential mechanism 30 (see FIG. 4), and details of the differential mechanism 30 will be described later.

From the above, it can be said that the electric crawler 1 of this Embodiment includes the traveling electric motor M1 that generates traveling power to be transmitted to the pair of left and right traveling crawlers 2, and the turning electric motor M2 that generates turning power to be transmitted to the pair of left and right traveling crawlers 2.

The PTO electric motor M3 is supported on the rear part of the main body frame 10 shown in FIG. 1. The PTO electric motor M3 is connected to a PTO power transmission unit 22 (second speed reducer) having a plurality of gears therein. A work machine 24 is connected to a rear part of the main body frame 10 via a two-point or three-point link-type elevating device 23. The work machine 24 can be driven by transmitting the power of the PTO electric motor M3 to the work machine 24 via the PTO power transmission unit 22. The work machine 24 is constituted by, for example, a tilling work machine (for example, a rotary tilling machine or a plow), but may be other work machines such as a fertilizing device.

### 2. Differential Mechanism

FIG. 4 is an explanatory view schematically illustrating a configuration of a differential mechanism 30 included in the electric crawler 1. The differential mechanism 30 is disposed in a turning power transmission unit P (power transmission path) between the turning electric motor M2 and each drive wheel (drive sprocket 6) of the pair of left and right traveling crawlers 2.

The differential mechanism 30 includes a pair of left and right planetary transmission mechanisms 31. The planetary transmission mechanisms 31 are disposed symmetrically. Each planetary transmission mechanism 31 has a planetary carrier 32, respectively. The left and right planetary carriers 32 are rotatably disposed in the transmission case 21 (see FIG. 3) such that a sun shaft 33 extending in the left-right direction and a center axis (rotation axis) are located coaxially. The center axis of the left-side planetary carrier 32 is connected to the drive shaft 6a of the drive wheel (drive sprocket 6) of the left-side traveling crawler 2. The center axis of the right-side planetary carrier 32 is connected to the drive shaft 6b of the drive wheel (drive sprocket 6) of the right-side traveling crawler 2.

Each of the left and right planetary transmission mechanisms 31 has a plurality of (for example, three) planetary gears 34. In the left-side planetary transmission mechanism 31, each of the plurality of planetary gears 34 is rotatably supported by the left-side planetary carrier 32. In the right-side planetary transmission mechanism 31, each of the plurality of planetary gears 34 is rotatably supported by the right-side planetary carrier 32. In each planetary transmission mechanism 31, the plurality of planetary gears 34 are positioned with the same radius around the sun shaft 33 and are disposed so as to mesh with sun gears 35 fixed to both left and right ends of the sun shaft 33, respectively.

In the left and right planetary transmission mechanisms 31, a ring gear 36 is disposed concentrically with the aforementioned sun shaft 33. Each ring gear 36 has internal teeth on its inner peripheral surface and external teeth on its outer peripheral surface. The ring gear 36 of the left-side planetary transmission mechanism 31 is disposed such that the internal teeth thereof mesh with the plurality of left-side planetary gears 34. The ring gear 36 of the right-side planetary transmission mechanism 31 is disposed such that the internal teeth thereof mesh with the plurality of right-side planetary gears 34. Each of the ring gears 36 is rotatably supported on the sun shaft 33 or on the drive shafts 6a and 6b via bearings.

When the turning electric motor M2 is rotated, the rotational power (turning power) of the turning electric motor M2 is transmitted to the left-side drive shaft 6a and the right-side drive shaft 6b via the turning power transmission unit P. More specifically, the turning power of the turning electric motor M2 is transmitted to transmission gears 37a and 37b attached to both the left and right ends of a motor-output shaft 37.

Here, the left-side transmission gear 37a is disposed so as to directly mesh with external teeth of the left-side ring gear 36. On the other hand, the right-side transmission gear 37b is disposed so as to mesh with a reverse gear 39 attached to a reversing shaft 38. This reverse gear 39 is disposed so as to mesh with the outer teeth of the right-side ring gear 36.

For example, in a state where the rotation of the traveling electric motor M1 is stopped, the sun shaft 33 and the sun gears 35 on both the left and right sides are fixed. Therefore, when the turning electric motor M2 (motor-output shaft 37) is rotated in the forward direction, the left-side ring gear 36 rotates in the reverse direction by a predetermined number of rotations (rotational speed), and the right-side ring gear 36 rotates in the forward direction at the same number of rotations as the left-side ring gear 36. Thus, the planetary gear 34 and the planetary carrier 32 on the left side rotate reversely about the sun shaft 33, while the planetary gear 34 and the planetary carrier 32 on the right side rotate forward about the sun shaft 33. Therefore, the drive shaft 6a coaxial with the left-side planetary carrier 32 rotates in the reverse direction, while the drive shaft 6b coaxial with the right-side planetary carrier 32 rotates in the forward direction. Thus, the left-side traveling crawler 2 moves backward, and the right-side traveling crawler 2 moves forward. In this case, the electric crawler 1 spins and turns to the left on the spot.

On the other hand, when the traveling electric motor M1 is rotated, the rotational power (traveling power) of the traveling electric motor M1 is transmitted to the sun shaft 33 via the traveling power transmission unit Q. Note that the traveling power transmission unit Q is configured to include a plurality of gears, a belt, and the like. Here, if the turning electric motor M2 is stopped in advance, for example, the rotation of the ring gears 36 on both the left and right sides is stopped and is brought into a fixed state. Therefore, the traveling power transmitted to the sun shaft 33 is equally transmitted to the left-side drive shaft 6a and the right-side drive shaft 6b via the left and right planetary transmission mechanisms 31 (the sun gears 35, the planetary gears 34, and the planetary carriers 32). As a result, the left and right drive sprockets 6 rotate in the same rotational direction at the same rotational speed, and the electric crawler 1 travels. That is, the electric crawler 1 moves forward or backward in accordance with the rotational direction of the traveling electric motor M1.

On the basis of the aforementioned principle, the rotational speeds and rotational directions of the traveling electric motor M1 and the turning electric motor M2 are combined and controlled as appropriate, whereby the electric crawler 1 can be turned while traveling. Note that the rotational speed and the rotational direction of the traveling electric motor M1 can be adjusted by an accelerator pedal and a lever for switching forward / backward traveling of the steering unit 14 (see FIG. 1). Further, the rotational speed and the rotational direction of the turning electric motor M2 can be adjusted by the rotational direction and a rotational angle of the steering wheel 15 (see FIG. 1).

As in this Embodiment, by separately providing the electric motor for generating the traveling power (traveling electric motor M1) and the electric motor for generating the turning power (turning electric motor M2) and by disposing the differential mechanism 30 in the turning power transmission unit P, the left and right traveling crawlers 2 can be driven separately by the left and right electric motors, whereby the following effects can be obtained as compared with a left / right independent driving method of performing traveling and turning of a vehicle.

The turning electric motor M2 only needs to be a motor capable of generating power that causes a rotation difference (torque difference) between the left and right drive wheels (drive sprockets 6). Thus, the turning electric motor M2 does not have to have the same specification as that of the traveling electric motor M1 that needs to generate a large power for traveling. That is, an electric motor having an output lower than that of the traveling electric motor M1 can be used as the turning electric motor M2. As a result, an inexpensive and compact electric crawler 1 can be realized.

Further, at the time of straight traveling, by bringing into the differential lock state in which the rotation of the motor-output shaft 37 is stopped, the left and right drive wheels can be rotated in the same direction at the same rotational speed. As a result, the straight traveling stability can be improved. On the other hand, at the time of turning, by driving both the traveling electric motor M1 and the turning electric motor M2, the traveling speed and the turning radius can be adjusted in a stepless manner so as to perform smooth turning.

Further, unlike the left and right independent drive system, either one of the left and right drive wheels is not rapidly decelerated any more during turning. As a result, a road surface (for example, a field) is less likely to be damaged by the traveling crawler 2 on the inner side of the turning. Further, unlike the left and right independent drive system, during turning, the traveling crawler 2 on the turning outer side is not driven by an excessive power to overcome the brake of the traveling crawler 2 on the turning inner side, or the horsepower of the traveling crawler 2 on the turning inner side does not remain any more. That is, the traveling electric motor M1 and the turning electric motor M2 can be driven to the necessary minimum and the generated traveling power and turning power can be used without waste, so that the energy efficiency can be improved.

In this Embodiment, the maximum output of the turning electric motor M2 is set to, for example, 0.9 times or less of the maximum output of the traveling electric motor M1. Note that the maximum output of the turning electric motor M2 may be set to 0.8 times or less of the maximum output of the traveling electric motor M1 or may be set to 0.7 times or less. From the viewpoint of reliably realizing an inexpensive and compact electric crawler 1, it is desirable that the maximum output of the turning electric motor M2 is smaller than the maximum output of the traveling electric motor M1.

### 3. Configuration of Control System of Electric Crawler

Subsequently, a configuration of a control system of the electric crawler 1 will be described. FIG. 5 is a block diagram schematically illustrating a configuration of the control system of the electric crawler 1. Note that, in FIG. 5, a solid line indicates a power supply path, and a broken line indicates a signal path. The electric crawler 1 includes a charger 51, an inverter 52, a relay box 53, a high-voltage branch box 54, a DC-DC converter 55, the system controller 56, a high-voltage battery 57, and a lead battery (12V battery) 58, in addition to the traveling electric motor M1, the turning electric motor M2, and the PTO electric motor M3 described above. The system controller 56 is constituted by an electronic control unit, also referred to as an Electronic Control Unit (ECU), and executes electrical control of each part of the electric crawler 1. The high-voltage battery 57 corresponds to the battery unit 13 shown in FIG. 1.

The traveling electric motor M1, the turning electric motor M2, and the PTO electric motor M3 (hereinafter, also referred to as the traveling electric motor M1 and the like) are driven by electric power supplied from the high-voltage battery 57 via the relay box 53, the high-voltage branch box 54, and the inverter 52.

The charger 51 (also referred to as a power feeder) converts an AC voltage supplied from a commercial power supply (not shown) via a power feeding cable into a DC voltage. The inverter 52 converts a DC voltage supplied from the high-voltage battery 57 into an AC voltage and supplies it to the traveling electric motor M1 and the like. As a result, the traveling electric motor M1 and the like are rotated. The supply of the AC voltage (current) from the inverter 52 to the traveling electric motor M1 and the like is performed on the basis of a rotation command (command value) output from the system controller 56.

The relay box 53 is a battery control unit that configured to include a battery relay and a fuse, and controls the battery relay so as to control an input and an output of the high-voltage battery 57. The high-voltage branch box 54 is configured to include a charger relay, an inverter relay, a fuse, and the like. The voltage output from the aforementioned charger 51 is supplied to the high-voltage battery 57 via the high-voltage branch box 54 and the relay box 53. As a result, the high-voltage battery 57 can be charged. The voltage output from the high-voltage battery 57 is supplied to the inverter 52 via the relay box 53 and the high-voltage branch box 54.

The DC-DC converter 55 steps down a direct-current voltage of a high voltage (for example, 300V) supplied from the high-voltage battery 57 via the high-voltage branch box 54 to a low voltage (for example, 12V). The voltage output from the DC-DC converter 55 is supplied to the system controller 56 or the like in the same manner as the output from the lead battery 58.

The traveling electric motor M1 incorporates a traveling rotational speed sensor SE1. The traveling rotational speed sensor SE1 is constituted by, for example, an encoder, and detects an actual rotational speed of the motor-output shaft of the traveling electric motor M1. Information detected by the traveling rotational speed sensor SE1, that is, information on the rotational speed of the traveling electric motor M1 is input to the system controller 56.

The turning electric motor M2 incorporates a turning rotational speed sensor SE2. The turning rotational speed sensor SE2 is constituted by, for example, an encoder, and detects the actual rotational speed of the motor-output shaft of the turning electric motor M2. Information detected by the turning rotational speed sensor SE2, that is, information on the rotational speed of the turning electric motor M2 is input to the system controller 56.

The PTO electric motor M3 incorporates a PTO rotational speed sensor SE3. The PTO rotational speed sensor SE3 is constituted by, for example, an encoder, and detects the actual rotational speed of the motor-output shaft of the PTO electric motor M3. Information detected by the PTO rotational speed sensor SE3, that is, information on the rotational speed of the PTO electric motor M3 is input to the system controller 56.

The electric crawler 1 further includes an alarm unit 60 that issues an alarm. The alarm unit 60 is disposed in the vicinity of the steering unit 14 or the driver's seat 11. The alarm unit 60 is configured to include a display unit 61, a sound output unit 62, and a light emitting unit 63.

The display unit 61 is constituted by a monitor including a liquid crystal display device, for example. On the display unit 61, an alarm information is displayed, for example. That is, the electric crawler 1 includes the display unit 61 that displays information. The sound output unit 62 is constituted by a buzzer, a speaker, or the like, for example, and outputs the alarm information by voice or sound. The light emitting unit 63 is constituted by a LED lamp, for example, and lights or flashes at the alarm.

The electric crawler 1 further includes a right-side sensor 71SR and a left-side sensor 71SL. The right-side sensor 71SR and the left-side sensor 71SL are constituted by encoders, for example. The right-side sensor 71SR detects the rotational speed of the rotating shaft (drive shaft 6b) of the drive wheel of the right-side traveling crawler 2. The left-side sensor 71SL detects the rotational speed of the rotating shaft (drive shaft 6a) of the drive wheel of the left-side traveling crawler 2.

The electric crawler 1 includes a transmission / reception unit (not shown) and can communicate with the outside via the transmission / reception unit. As a result, an operation signal can be transmitted from the outside to the electric crawler 1, and the electric crawler 1 can be made to travel automatically by remote control. In addition, various types of information detected by the electric crawler 1 can be transmitted to an external management device, and a state of the electric crawler 1 (presence or absence of a failure, for example) can be remotely monitored by the management device.

### 4. Control for Avoiding Excessive Rotation of Turning Motor

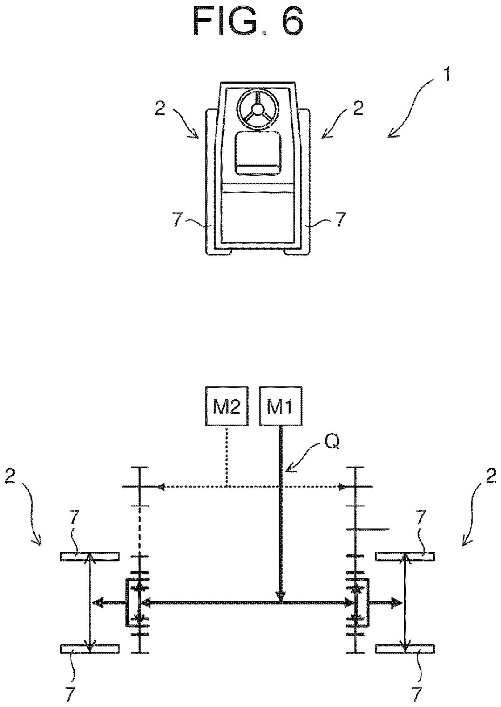

FIG. 6 is an explanatory view illustrating a power transmission path in a case where the traveling electric motor M1 is driven, and the electric crawler 1 is moving forward. When the electric crawler 1 is moving forward, the turning electric motor M2 is not driven and is in a free state. In this state, since the left and right traveling crawlers 2 (particularly, the crawler belts 7) are in contact with the ground, the differential lock state is brought about, and the drive wheels of the left and right traveling crawlers 2 rotate in the same direction at the same rotational speed.

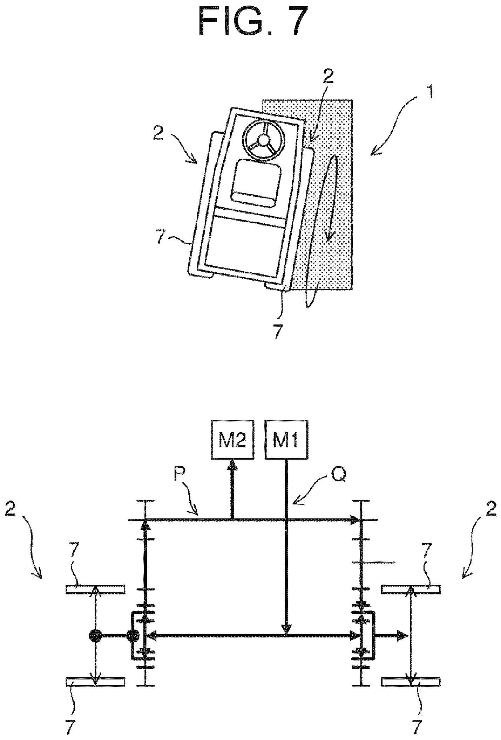

FIG. 7 is an explanatory view illustrating a power transmission path when the right-side traveling crawler 2 of the electric crawler 1 is caught in mud and idles. When the right-side traveling crawler 2 idles, the turning electric motor M2 is rotated from the foot and may rotate excessively beyond the allowable rotational speed. Note that the phrase that "the turning electric motor M2 is rotated from the foot" means that the turning electric motor M2 is rotated by the power transmitted from one of the drive wheels of the traveling crawler 2 that is idling via the power transmission path (the turning power transmission unit P). That is, when the right-side traveling crawler 2 idles, the differential operates, and the rotational power of the left-side traveling crawler 2 is transferred to the right-side traveling crawler 2. As a result, the left-side traveling crawler 2 stops, while the drive wheel of the right-side traveling crawler 2 rotates at a rotational speed twice as high as that when traveling at a predetermined speed. As described above, as the result of the right-side traveling crawler 2 rotating at a high speed, the turning electric motor M2 rotates at an overspeed. There is a concern that the overspeed of the turning electric motor M2 leads to breakage of the turning electric motor M2.

Thus, in this Embodiment, the following control is executed to avoid the overspeed of the turning electric motor M2 and to prevent the breakage of the turning electric motor M2.

### 4-1. Overspeed Avoidance Control - Part 1

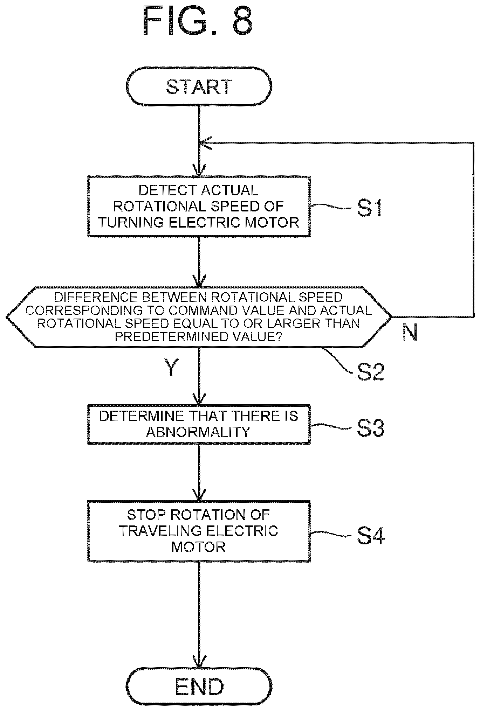

FIG. 8 is a flowchart illustrating a flow of an operation according to an example of control to avoid overspeed of the turning electric motor M2 (hereinafter, also referred to as overspeed avoidance control). First, when the turning rotational speed sensor SE2 detects an actual rotational speed RR (1/min) of the turning electric motor M2 (S1), the system controller 56 determines whether or not a difference between a rotational speed RC (1/min) of the turning electric motor M2 corresponding to the command value output to the inverter 52 and the actual rotational speed RR is equal to or larger than a fixed value Rth (1/min) (S2). Note that the command value is set by the operator in accordance with the rotational angle and the rotational direction of the steering wheel 15. If the difference between the actual rotational speed RR and the rotational speed RC is less than the fixed value Rth (No at S2), the processing returns to S1, and the operation at S1 and after is repeated.

If the difference between the actual rotational speed RR and the rotational speed RC is equal to or larger than the fixed value Rth (Yes at S2), the system controller 56 determines that there is an abnormality (S3) and then, outputs a command value to the inverter 52 so as to stop the rotation of the traveling electric motor M1 (S4).

As described above, the electric crawler 1 of this Embodiment includes the turning rotational speed sensor SE2 as a rotational speed sensor that detects the actual rotational speed RR of the turning electric motor M2. In addition, the electric crawler 1 includes the system controller 56 as a control unit that generates a command value for controlling the rotational speed RC of the turning electric motor M2.

If the difference between the actual rotational speed RR (for example, RR = 0) and the rotational speed RC corresponding to the command value is equal to or larger than the fixed value Rth, it can be determined that the turning electric motor M2 is rotating at an allowable rotational speed or higher (overspeed). Therefore, in this case, since the system controller 56 determines that there is an abnormality, some measures can be taken. In terms of determining whether or not a subsequent countermeasure is necessary, as described above, the system controller 56 preferably determines that there is an abnormality, if the difference between the actual rotational speed RR and the rotational speed RC corresponding to the command value is equal to or larger than the fixed value Rth (see S3).

In particular, when the system controller 56 stops the rotation of the traveling electric motor M1 as in the case of S4, the left and right traveling crawlers 2 are stopped and thus, the turning electric motor M2 is not turned from the foot, and the overspeed of the turning electric motor M2 is avoided. Therefore, from the viewpoint of reducing damage due to overspeed of the turning electric motor M2, it is desirable that the system controller 56 stops the rotation of the traveling electric motor M1 after determining that there is an abnormality at S3 (see S4).

### 4-2. Overspeed Avoidance Control - Part 2

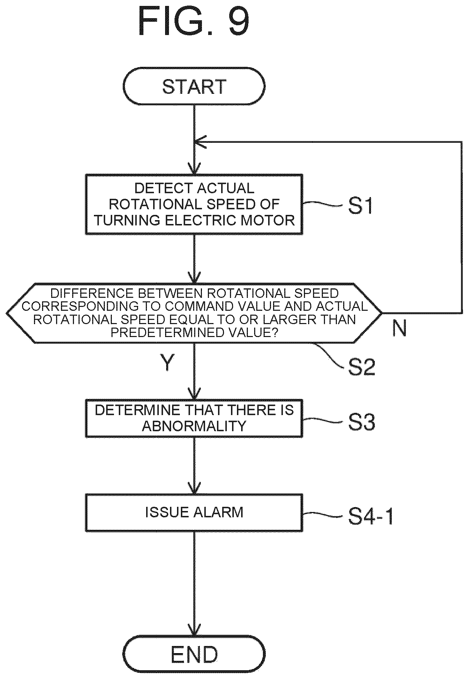

FIG. 9 is a flowchart illustrating a flow of an operation according to another example of the overspeed avoidance control of the turning electric motor M2. S1 to S3 are the same as in FIG. 8. When the system controller 56 determines that there is an abnormality at S3, the system controller 56 then causes the alarm unit 60 to issue an alarm of the abnormality (S4-1). For example, the system controller 56 executes control such as causing the display unit 61 to display that an abnormality has occurred, causing the sound output unit 62 to output sound indicating that an abnormality has occurred, or causing the light emitting unit 63 to flash.

By causing the alarm unit 60 to issue an alarm of an abnormality, it is possible to notify an operator that an abnormality has occurred in the vehicle. As a result, the operator can take an appropriate measure to avoid the overspeed of the turning electric motor M2 and damage caused by that by turning the vehicle by the operation of the steering wheel 15 so as to escape from the mud or the like. Therefore, from the viewpoint of enabling the measure as above by the operator, the system controller 56 may cause the alarm unit 60 to issue an alarm that there is an abnormality after determining that there is an abnormality (see S4-1).

### 4-3. Overspeed Avoidance Control - Part 3

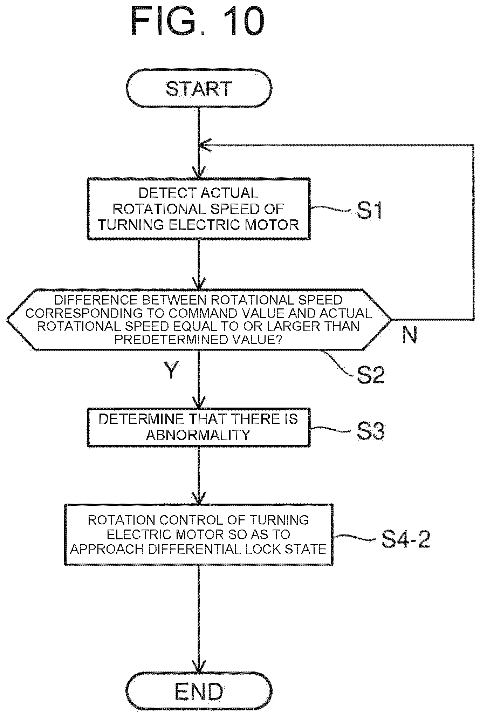

FIG. 10 is a flowchart illustrating a flow of an operation according to still another example of the overspeed avoidance control of the turning electric motor M2. S1 to S3 are the same as in FIG. 8. When the system controller 56 determines that there is an abnormality at S3, the system controller 56 then outputs a command value to the inverter 52 so as to rotate the turning electric motor M2 in a rotational direction approaching the differential lock state (S4-2).

By actively rotating the turning electric motor M2 so as to bring it close to a differential lock state, even when one of the left and right traveling crawlers 2 is stuck in mud and idles, a drive force is transmitted to the other traveling crawler 2 and a propulsive force is applied to the electric crawler 1. As a result, the one traveling crawler 2 can escape from the mud. That is, in this case, the idling of the one traveling crawler 2 is avoided and thus, the turning electric motor M2 is prevented from being rotated from the foot and being brought into overspeed. In this way, from the viewpoint of reducing damage due to overspeed of the turning electric motor M2, the system controller 56 may rotate the turning electric motor M2 in the rotational direction approaching the differential lock state after determining that there is an abnormality (see S4-2).

### 4-4. Overspeed Avoidance Control - Part 4

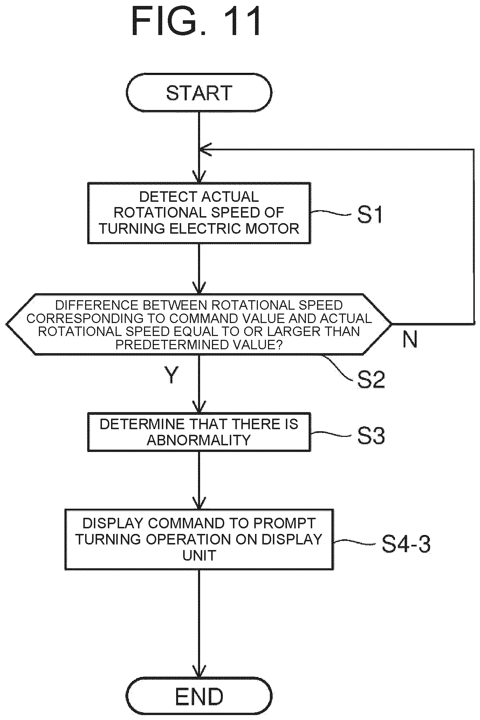

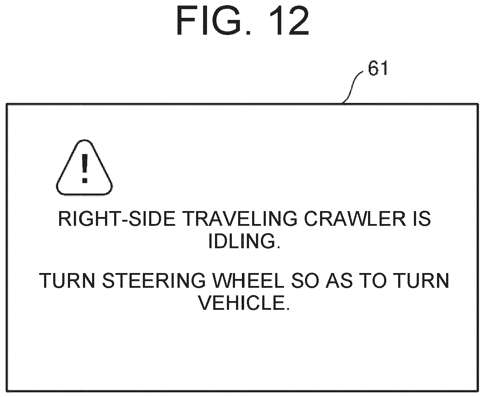

FIG. 11 is a flowchart illustrating a flow of an operation according to still another example of the overspeed avoidance control of the turning electric motor M2. S1 to S3 are the same as in FIG. 8. If the system controller 56 determines at S3 that there is an abnormality, then, as shown in FIG. 12, the system controller 56 causes the display unit 61 to display an instruction to prompt the operator to perform a turning operation (S4-3).

In this case, on the basis of the instruction displayed on the display unit 61, the operator can take an appropriate measure to avoid the overspeed of the turning electric motor M2 and the damage caused by that by making the vehicle escape from the mud by the turning operation. In this way, from the viewpoint of reducing damage due to overspeed of the turning electric motor M2 by the manual operation of the operator, the system controller 56 may cause the display unit 61 to display an instruction to prompt the turning operation when an abnormality occurs in the vehicle (see S4-3).

### 4-5. Overspeed Avoidance Control - Part 5

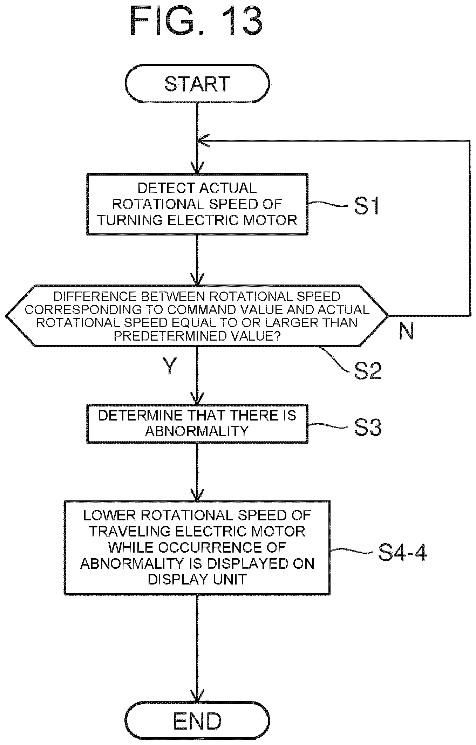

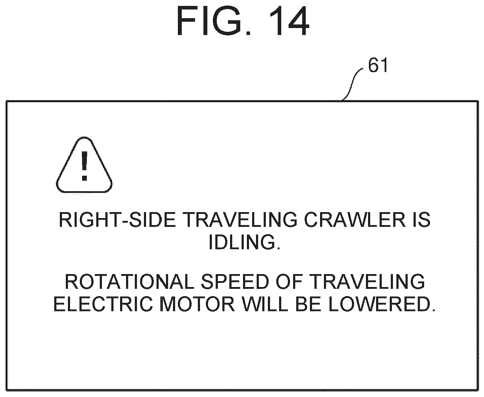

FIG. 13 is a flowchart illustrating a flow of an operation according to still another example of the overspeed avoidance control of the turning electric motor M2. S1 to S3 are the same as in FIG. 8. If the system controller 56 determines at S3 that there is an abnormality, then, as shown in FIG. 14, the system controller 56 lowers the rotational speed of the traveling electric motor M1 so that the rotational speed of the turning electric motor M2 becomes equal to or smaller than the allowable rotational speed, while causing the display unit 61 to display that an abnormality has occurred (S4-4).

In this case, the operator can recognize the abnormality of the vehicle (the idling of the one traveling crawler 2) on the basis of the display of the display unit 61. Further, by reducing the rotational speed of the traveling electric motor M1, even if the turning electric motor M2 is rotated from the foot, the rotational speed of the turning electric motor M2 can be set to the allowable rotational speed or less. In this way, from the viewpoint of reducing the overspeed of the turning electric motor M2 and damage caused by that, the system controller 56 may execute control so as to reduce the rotational speed of the traveling electric motor M1 after determining that there is an abnormality (see S4-4).

### 4-6. Overspeed Avoidance Control - Part 6

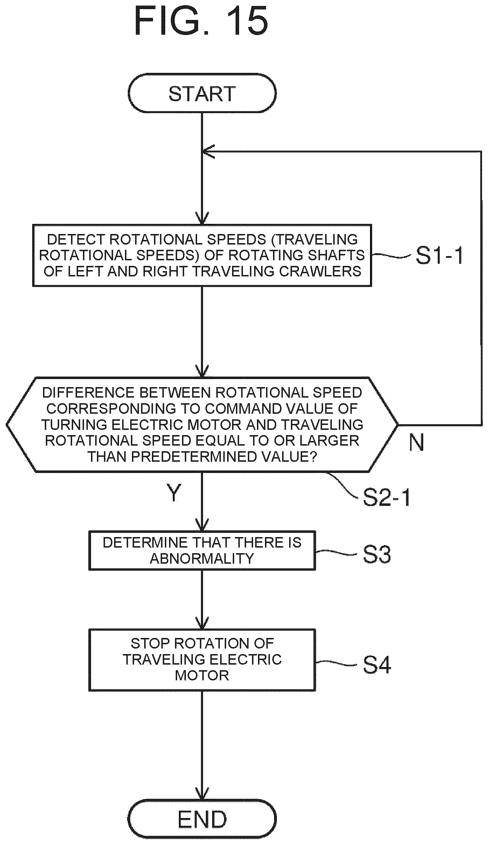

FIG. 15 is a flowchart illustrating a flow of an operation according to still another example of the overspeed avoidance control of the turning electric motor M2. In the example of FIG. 15, the left-side sensor 71SL and the right-side sensor 71SR detect the rotational speeds (traveling rotational speeds R1a and R1b) of the rotating shafts (drive shafts 6a and 6b) of the respective drive wheels of the left and right traveling crawlers 2 (S1-1). The system controller 56 determines whether or not the difference between the rotational speed RC (1/min) of the turning electric motor M2 corresponding to the command value output to the inverter 52 and the traveling rotational speed R1a (1/min) detected at S1-1 is equal to or larger than a predetermined value R0 (1/min) (S2-1). In addition, at S2-1, it is determined whether or not the difference between the rotational speed RC and the traveling rotational speed R1b (1/min) detected at S1-1 is equal to or larger than the predetermined value R0. If the difference between the rotational speed RC corresponding to the command value and the traveling rotational speed R1a (or R1b) is less than the predetermined value R0 (No at S2-1), the processing returns to S1 and repeats the operation at S1 and after.

On the other hand, if the difference between the rotational speed RC corresponding to the command value and the traveling rotational speed R1a (or R1b) is equal to or larger than the predetermined value R0 (Yes at S2-1), the system controller 56 determines that there is an abnormality (S3), and then outputs a command value to the inverter 52 and stops the rotation of the traveling electric motor M1 (S4).

For example, when the electric crawler 1 is caused to travel straight forward, the command value for controlling the rotation of the turning electric motor M2 corresponds to the rotational speed zero. When the difference between the rotational speed RC corresponding to the aforementioned command value and the traveling rotational speed R1a (or R1b) is equal to or larger than the predetermined value R0, it can be determined that one of the left and right traveling crawlers 2 idles and rotates at a high speed, whereby the turning electric motor M2 is turned from the foot and brought into overspeed.

As described above, in a point of enabling determination on presence or absence of overspeed of the turning electric motor M2, the electric crawler 1 may include the left-side sensor 71SL and the right-side sensor 71SR.

Further, in a point that it is possible to distinguish whether or not either one of the left and right traveling crawlers 2 is unable to travel (due to idling, for example), the system controller 56 may determine that there is an abnormality when the difference between the rotational speed RC of the turning electric motor M2 corresponding to the command value and the traveling rotational speed R1a (or R1b) is equal to or larger than the predetermined value R0 (see S2-1 and S3).

The various types of overspeed avoidance control of the turning electric motor M2 described above can be combined as appropriate. For example, if the operator does not take any measures within a predetermined time after the issuance of an alarm at S4-1 in FIG. 9, the following control may be further executed. For example, the rotation of the traveling electric motor M1 may be stopped as at S4 in FIG. 8. As at S4-2 in FIG. 10, the rotation of the turning electric motor M2 may be controlled so as to approach the differential lock state.

As at S4-4 in FIG. 13, the rotational speed of the traveling electric motor M1 may be controlled to be lowered together with the display of the occurrence of the abnormality on the display unit 61.

### 5. Supplement

In this Embodiment, a case where the electric crawler 1 is of such a type that the crawler belt 7 is wound around one drive wheel (drive sprocket) and two driven wheels (driven sprockets) in a triangular shape has been described, but the electric crawler 1 may be of such a type that the crawler belt 7 is wound around one drive wheel and one driven wheel aligned in the front-rear direction.

### 6. Appendix

The electric crawler 1 described in this Embodiment can also be expressed as an electric crawler vehicle described in the following supplements.

The electric crawler vehicle of Appendix (1) includes
a pair of left and right traveling crawlers, each having a drive wheel,
a traveling electric motor that generates traveling power to be transmitted to the pair of left and right traveling crawlers,
a turning electric motor that generates turning power to be transmitted to the pair of left and right traveling crawlers, and
a differential mechanism disposed in a power transmission path between the turning electric motor and each drive wheel of the pair of left and right traveling crawlers.

The electric crawler vehicle of Appendix (2) is configured such that, in the electric controller vehicle described in Appendix (1),
a maximum output of the turning electric motor is smaller than a maximum output of the traveling electric motor.

The electric crawler vehicle of Appendix (3) includes, in the electric crawler vehicle described in Appendix (1) or (2),
a rotational speed sensor that detects an actual rotational speed of the turning electric motor, and
a control unit that generates a command value for controlling a rotational speed of the turning electric motor, in which
the control unit determines that there is an abnormality when a difference between the rotational speed of the turning electric motor corresponding to the command value and an actual rotational speed detected by the rotational speed sensor is equal to or larger than a fixed value.

The electric crawler vehicle of Appendix (4) is configured such that, in the electric crawler vehicle described in Appendix (3),
after determining that there is the abnormality, the control unit stops rotation of the traveling electric motor.

The electric crawler vehicle of Appendix (5) is configured such that, in the electric crawler vehicle described in Appendix (3),
an alarm unit is further provided, and
after determining that there is the abnormality, the control unit causes the alarm unit to issue an alarm of abnormality.

The electric crawler vehicle of Appendix (6) is configured such that, in the electric crawler vehicle described in Appendix (3),
after determining that there is the abnormality, the control unit rotates the turning electric motor in a rotational direction approaching a differential lock state.

The electric crawler vehicle of Appendix (7) is configured such that, in the electric crawler vehicle described in Appendix (3),
a display unit that displays information is further provided, and
after determining that there is the abnormality, the control unit causes the display unit to display an instruction for prompting an operator to perform a turning operation.

The electric crawler vehicle of Appendix (8) is configured such that, in the electric crawler vehicle described in Appendix (3) or (7),
a display unit that displays information is further provided, and after determining that there is the abnormality, the control unit lowers the rotational speed of the traveling electric motor so that the rotational speed of the turning electric motor becomes equal to or smaller than an allowable rotational speed, while causing the display unit to display that an abnormality has occurred.

The electric crawler vehicle of Appendix (9) further includes, in the electric crawler vehicle described in Appendix (3),
a left-side sensor and a right-side sensor for detecting a rotational speed of a rotating shaft of each drive wheel of left and right crawlers, respectively.

The electric crawler vehicle of Appendix (10) is configured such that, in the electric crawler vehicle described in Appendix (9),
the control unit determines that there is an abnormality, when a difference between a rotational speed of the turning electric motor corresponding to the command value and the rotational speed detected by the left-side sensor or the right-side sensor is equal to or larger than a predetermined value.

Although the Embodiment of the present invention has been described above, a scope of the present invention is not limited thereto, and the present invention can be implemented by being expanded or changed within a range not departing from the gist of the invention.

### INDUSTRIAL APPLICABILITY

The present invention is applicable to a crawler vehicle used as a work machine such as an agricultural machine and a construction machine.

### REFERENCE SIGNS LIST

1 Electric crawler (electric crawler vehicle)
2 Traveling crawler
6 Drive sprocket (drive wheel)
6a Drive shaft
6b Drive shaft
30 Differential mechanism
56 System controller (control unit)
60 Alarm unit
61 Display unit
71SL Left-side sensor
71SR Right-side sensor
M1 Traveling electric motor
M2 Turning electric motor
P Turning power transmission unit (power transmission path)
SE2 Turning rotational speed sensor (rotational speed sensor)

## Claims

1. An electric crawler vehicle comprising: a pair of left and right traveling crawlers, each having a drive wheel,
a traveling electric motor that generates traveling power to be transmitted to the pair of left and right traveling crawlers;
a turning electric motor that generates turning power to be transmitted to the pair of left and right traveling crawlers; and
a differential mechanism disposed in a power transmission path between the turning electric motor and each drive wheel of the pair of left and right traveling crawlers.

2. The electric crawler vehicle according to claim 1, wherein a maximum output of the turning electric motor is smaller than a maximum output of the traveling electric motor.

3. The electric crawler vehicle according to claim 1, comprising a rotational speed sensor that detects an actual rotational speed of the turning electric motor; and
a control unit that generates a command value for controlling a rotational speed of the turning electric motor, wherein
the control unit determines that there is an abnormality when a difference between the rotational speed of the turning electric motor corresponding to the command value and an actual rotational speed detected by the rotational speed sensor is equal to or larger than a fixed value.

4. The electric crawler vehicle according to claim 3, wherein, after determining that there is the abnormality, the control unit stops rotation of the traveling electric motor.

5. The electric crawler vehicle according to claim 3, further comprising an alarm unit, wherein
after determining that there is the abnormality, the control unit causes the alarm unit to issue an alarm of abnormality.

6. The electric crawler vehicle according to claim 3, wherein, after determining that there is the abnormality, the control unit rotates the turning electric motor in a rotational direction approaching a differential lock state.

7. The electric crawler vehicle according to claim 3, further comprising a display unit that displays information, wherein
after determining that there is the abnormality, the control unit causes the display unit to display an instruction for prompting an operator to perform a turning operation.

8. The electric crawler vehicle according to claim 3, further comprising a display unit that displays information, wherein
after determining that there is the abnormality, while causing the display unit to display that an abnormality has occurred, the control unit lowers the rotational speed of the traveling electric motor such that the rotational speed of the turning electric motor becomes equal to or smaller than an allowable rotational speed.

9. The electric crawler vehicle according to claim 3, further comprising a left-side sensor and a right-side sensor that detect a rotational speed of a rotating shaft of each drive wheel of the left and right traveling crawlers, respectively.

10. The electric crawler vehicle according to claim 9, wherein the control unit determines that there is an abnormality when a difference between a rotational speed of the turning electric motor corresponding to the command value and a rotational speed detected by the left-side sensor or the right-side sensor is equal to or larger than a predetermined value.
